# EUROPEAN PATENT SPECIFICATION

(11) **EP 4 576 487 B1**
(45) Date of publication and mention of the grant of the patent: **16.09.2026**
(21) Application number: 23307252.9
(22) Date of filing: 19.12.2023
(51) Int. Cl.: H02J 7/00

(54) **A SWITCHING CIRCUIT FOR CELL BALANCING IN A BATTERY MANAGEMENT SYSTEM**
SCHALTKREIS ZUM ZELLENAUSGLEICH IN EINEM BATTERIEVERWALTUNGSSYSTEM
CIRCUIT DE COMMUTATION POUR ÉQUILIBRAGE DE CELLULES DANS UN SYSTÈME DE GESTION DE BATTERIE

(43) Date of publication of application: 25.06.2025
(73) Proprietor: NXP USA, Inc., Austin TX 78735 (US)
(72) Inventor: Abouda, Pascal Kamel, 31023 Toulouse Cedex 1 (FR); Tico, Olivier, 31023 Toulouse Cedex 1 (FR)
(74) Representative: Schmütz, Christian Klaus Johannes

(56) References cited:
- EP-A1- 3 553 874
- CN-U- 219 107 073
- US-A1- 2005 269 989
- HUAXIA ZHAN ET AL: "Combining electric vehicle battery charging and battery cell equalisation in one circuit", IET ELECTRICAL SYSTEMS IN TRANSPORTATION, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 4, 23 June 2021 (2021-06-23), pages 377 - 390, XP006117000, ISSN: 2042-9738, DOI: 10.1049/ELS2.12031

## Description

### Field

The present disclosure relates to a switching circuit for cell balancing in a battery management system (BMS)**.** Examples of BMS could be found in EP3553874A1.

### Summary

According to a first aspect of the present disclosure there is provided a switching circuit for cell-balancing in a battery management system, BMS, the switching circuit comprising:
a first battery connection terminal, for connecting to a first battery terminal;
a second battery connection terminal, for connecting to a second battery terminal;
a cell balancing field effect transistor, FET, comprising:
   a gate terminal;
   a drain terminal connected to the first battery connection terminal;
   a source terminal for connected to the second battery connection terminal; and
   a body terminal;
a gate control circuit that is configured to connect the gate terminal of the cell balancing FET to the battery connection terminal that has the lowest voltage; and
a bias resistor that is connected in series between the body terminal of the cell balancing FET and one of the first and second battery connection terminals.

Advantageously, such a switching circuit can benefit from occupying a relatively low area on an integrated circuit, while still achieving leakage currents that are equivalent to a back-to-back switch implementation.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the appended claims are covered as well.

The above discussion is not intended to represent every example embodiment or every implementation within the scope of the current Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example of a cell balancing switch;
Figure 2 shows a back-to-back cell balancing switch;
Figure 3 shows an example embodiment of a switching circuit for cell balancing in a BMS according to the present disclosure;
Figure 4 shows a Direct Power Injection "DPI" simulation bench; and
Figure 5 shows simulation results.

### Detailed Description

In a battery management system (BMS), it is possible to perform passive cell balancing with an IC (integrated circuit) integrated switch. This switch can have a very low on-resistance (which can be referred to as R_{dson} when a FET is used as the switch; i.e., the resistance between the drain and the source when the FET is switched on), such as 0.25 Ohms. Advantageously, such a low on-resistance can result in minimal heat dissipation in the IC when the switch is closed and cell balancing is activated. The leakage through this switch has a significant impact on the accuracy of cell measurement, which is a crucial aspect of the BMS. Moreover, this switch should have minimal leakage even if the battery cell is replaced by a busbar. When the battery cell is replaced by a busbar, it can result in a negative voltage across the switch when current is drawn from the battery pack that includes the battery cell. If a single MOS was used as a switch, an undesirable leakage current will flow through its body diode if a busbar is used such that a negative voltage exists across the switch. Such a busbar can simply be a metal wire that is used in place of a battery cell. When current is drawn from the battery pack, the busbar can create up to -3V across the switch due to its resistance.

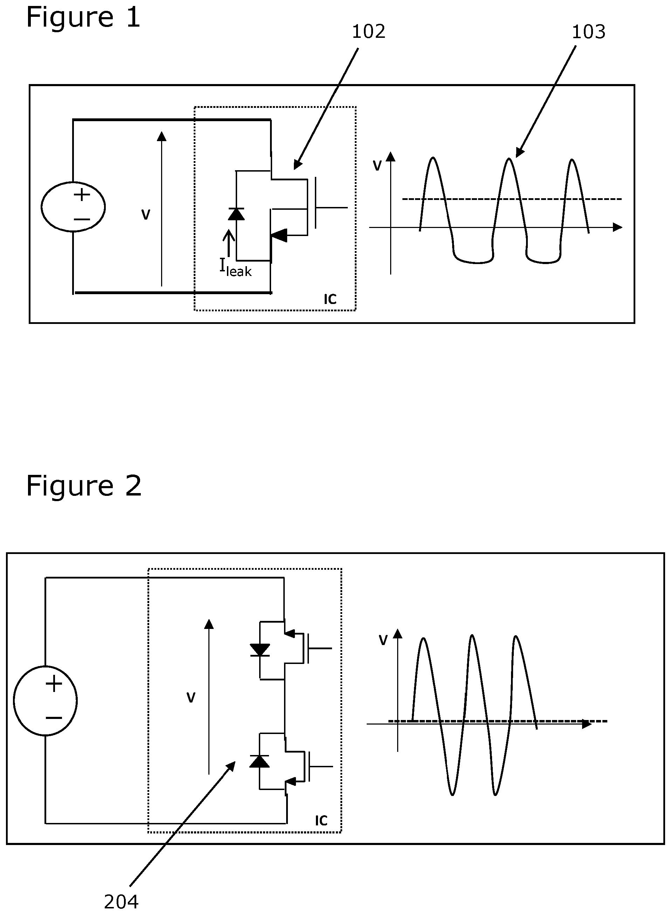

Figure 1 shows an example of a cell balancing switch 102, which in Figure 1 is a MOSFET (metal oxide semiconductor field effect transistor). In an EMI (electromagnetic interference) polluted environment, transient voltages can be imposed on the battery cell's DC level and injected upon the switch 102. Also, a leakage current (Iₗₑₐₖ) can occur when the cell balancing switch 102 is connected to a busbar. The negative leakage current (Iₚₑₐₖ) passes through the body diode of the MOSFET 102. Using a single MOS switch with a single body diode (Figure 1) would lead to a DC shift if: the EMI levels go into the negative; and / or the switch 102 is connected to a busbar. As shown on the right-hand side of Figure 1, this results in a DC voltage shift / offset 103, which in turn causes clipping for the negative part of the alternating voltage waveform that is shown in Figure 1. This would highly impact the achievable accuracy of the cell voltage measurement accuracy, which is dire for the BMS performance and may cause safety issues.

Figure 2 shows a back-to-back cell balancing switch 204, which limits the negative leakage current and prevents the DC voltage shift that is shown in Figure 1.

However, the area required on the integrated circuit to implement the back-to-back cell balancing switch 204 of Figure 2 is 4 times greater than the cell balancing switch of Figure 1. Furthermore, in some applications there can be 18 cell balancing switches on a single integrated circuit, in which case the total area of those switches increases substantially.

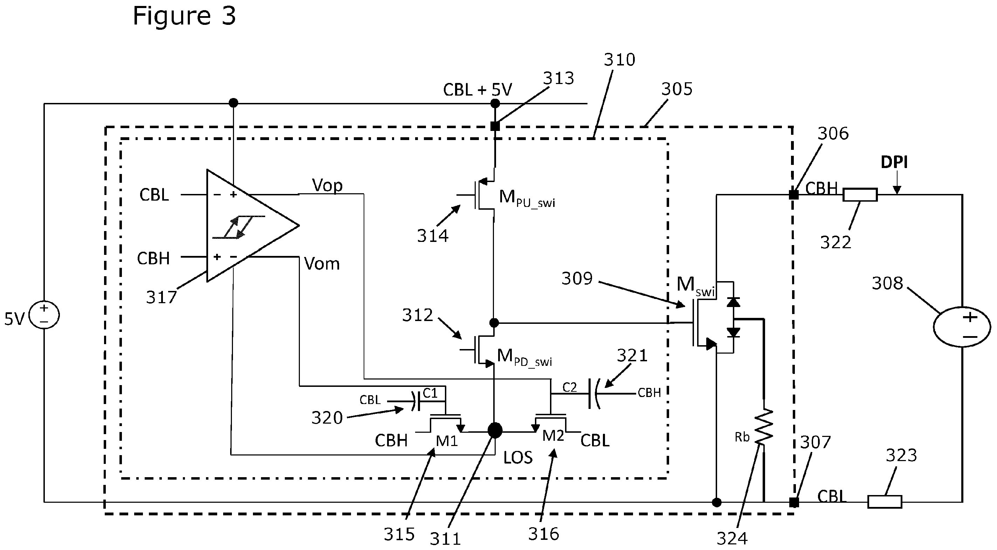

Figure 3 shows an example embodiment of a switching circuit 305 for cell balancing in a BMS according to the present disclosure. The switching circuit 305 includes a first battery connection terminal (CBH - cell balancing high) 306 and a second battery connection terminal (CBL 0 cell balancing low) 307. The first battery connection terminal 306 is for connecting to a first battery terminal, in this example a positive terminal of a battery cell 308. The second battery connection terminal 307 is for connecting to a second battery terminal, in this example a negative terminal of the battery cell 308.

The switching circuit 305 includes a cell balancing field effect transistor, FET, 309 that is connected between the first battery connection terminal 306 and the second battery connection terminal 307. More particularly, a conduction channel of the cell balancing FET 309 is connected in series between the first battery connection terminal 306 and the second battery connection terminal 307. In this example, as shown in Figure 3, the cell balancing FET 309 is the only FET that is connected between the first battery connection terminal 306 and the second battery connection terminal 307. That is, a back-to-back arrangement, such as the one illustrated in Figure 2, is not required.

The cell balancing FET 309 has a gate terminal, a drain terminal, a source terminal and a body terminal. The drain terminal is connected to the first battery connection terminal 306. The source terminal is connected to the second battery connection terminal. In Figure 3 an NMOS cell balancing FET 309 is shown. However, it will be appreciated that in other examples a PMOS cell balancing FET can be used instead, and that the necessary changes to the circuit can be made to accommodate the different type of FET.

The switching circuit 305 also includes a FET control circuit 310. As will be discussed in detail below, the FET control circuit 310 connects the gate terminal of the cell balancing FET 309 to the battery connection terminal 306, 307 that has the lowest voltage. This lowest voltage will be referred to as the lowest of supply (LOS).

The switching circuit 305 also includes a bias resistor (Rb) 324 that is connected in series between the body terminal of the cell balancing FET 309 and one of the first and second battery connection terminals (CBH, CBL) 306, 307. In the example of Figure 3, the bias resistor (Rb) 324 is connected in series between the body terminal of the cell balancing FET 309 and the second battery connection terminal (CBL) 307. The bias resistor (Rb) 324 can have a relatively high resistance value, for example in the order of mega Ohms, such that the circuit benefits from the back-to-back body to source and body to drain diodes across the battery cell. As a result, there is very little or no rectification (DC shift) that could compromise cell measurement accuracy. Therefore, advantageously, a highly accurate BMS can be achieved.

The FET control circuit 310 includes a lowest-of-supply node (LOS) 311, which, as will be discussed below, is set at a voltage level that corresponds to the lower one of the voltages at the first battery connection terminal 306 and the second battery connection terminal 307. The FET control circuit 310 also includes a gate pull-down switch (M_{PD_swi}) 312 that is connected between the lowest-of-supply node (LOS) 311 and the gate terminal of the cell balancing FET 309. More particularly, the conduction channel of the gate pull-down switch (M_{PD_swi}) 312 is connected in series between the gate terminal of the cell balancing FET 309 and the lowest-of-supply node (LOS) 311. In this way, the gate pull-down switch (M_{PD_swi}) 312 can selectively connect the gate terminal of the cell balancing FET 309 to the lowest-of-supply node (LOS) 311.

The FET control circuit 310 also includes a gate pull-up switch (M_{PU_swi}) 314 that is connected between a supply voltage terminal 313 and the gate terminal of the cell balancing FET 309. More particularly, the conduction channel of the gate pull-up switch (M_{PU_swi}) 314 is connected in series between the supply voltage terminal 313 and the gate terminal of the cell balancing FET 309. In this way, the gate pull-up switch (M_{PU_swi}) 314 can selectively connect the gate terminal of the cell balancing FET 309 to a supply voltage. As is known in the art, the gate pull-down switch (M_{PD_swi}) 312 and the gate pull-up switch (M_{PU_swi}) 314 are controlled by complementary control signals such that they are not both closed or open at the same time. In this example, the voltage level at the supply voltage terminal 313 is set at 5V above the voltage at the second battery connection terminal 307 (CBL + 5V).

The FET control circuit 310 also includes a first battery connection switch (M1) 315, a second battery connection switch (M2) 316 and an LOS node control circuit 317 for controlling these switches. The first battery connection switch (M1) 315 is connected between the first battery connection terminal (CBH) 306 and the lowest-of-supply node (LOS) 311. The second battery connection switch (M2) 316 is connected between the second battery connection terminal (CBL) 307 and the lowest-of-supply node (LOS) 311. The LOS node control circuit 317 is operable to:
- close the first battery connection switch (M1) 315 and open the second battery connection switch (M2) 316 when the voltage level at the first battery connection terminal (CBH) 306 is lower than the voltage level at the second battery connection terminal (CBL) 307; and
- open the first battery connection switch (M1) 315 and close the second battery connection switch (M2) 316 when the voltage level at the first battery connection terminal (CBH) 306 is higher than the voltage level at the second battery connection terminal (CBL) 307.

In the example of Figure 3, the LOS node control circuit 317 is provided as an amplifier. The amplifier compares the voltage level at the first battery connection terminal (CBH) 306 with the voltage level at the second battery connection terminal (CBL) 307. The amplifier can then provide a first amplifier output signal (Vom) and a second amplifier output signal (Vop) to respective control terminals of the first and second battery connection switches (M1, M2) 315. 316.

The first amplifier output signal (Vom) is provided to the control terminal of the first battery connection switch (M1) 315 in order to: i) close the first battery connection switch (M1) 315 when the voltage level at the first battery connection terminal (CBH) 306 is lower than the voltage level at the second battery connection terminal (CBL) 307; and ii) open the first battery connection switch (M1) 315 when the voltage level at the first battery connection terminal (CBH) 306 is higher than the voltage level at the second battery connection terminal (CBL) 307.

The second amplifier output signal (Vop) is provided to the control terminal of the second battery connection switch (M2) 316 in order to: i) open the second battery connection switch (M2) 316 when the voltage level at the first battery connection terminal (CBH) 306 is lower than the voltage level at the second battery connection terminal (CBL) 307; and ii) close the second battery connection switch (M2) 316 when the voltage level at the first battery connection terminal (CBH) 306 is higher than the voltage level at the second battery connection terminal (CBL) 307.

Beneficially, in this example the amplifier is a hysteresis amplifier such that it implements hysteresis when changing the polarity of the first and second amplifier output signals (Vop, Vom).

An important aspect of the circuit of Figure 3 is that a single MOSFET 309 can be used as a cell balancing switch (M_{swi}). The gate pull-up switch (M_{PU_swi}) 314 and the gate pull-down switch (M_{PD_swi}) 312 are used to turn ON and OFF the MOSFET 309. When the voltage at the first battery connection terminal 306 is greater than the voltage at the second battery connection terminal 307 (i.e., CBH >CBL), which reflects the case of a battery cell or positive busbar (current injected into the battery pack), the hysteresis amplifier 317 (which can also be referred to as a hysteresis comparator) turns the second battery connection switch (M2) 316 ON and turns the first battery connection switch (M1) 315 OFF. This allows the gate of the cell balancing FET 309 to be pulled down by the gate pull-down switch (M_{PD_swi}) 312 to the lowest of supply (LOS). Conversely, if the voltage at the first battery connection terminal 306 is less than the voltage at the second battery connection terminal 307 (i.e., CBH<CBL), which can happen in the case of a negative busbar (current drawn from the battery pack), then the second battery connection switch (M2) 316 is OFF and the first battery connection switch (M1) 315 is ON. This allows the gate of the cell balancing FET 309 to be pulled down by the gate pull-down switch (M_{PD_swi}) 312 to LOS, which in this case is the first battery connection terminal 306. Either way, the body of the cell balancing switch (M_{swi}) 309 is connected to the second battery connection terminal (CBL) 307 through the high value bias resistor (Rb) 324 to limit any sort of leakage that could come from the second battery connection terminal (CBL) 307. Therefore, any direct power injection (which is modelled in Figure 3 as DPI at the first battery connection terminal (CBH) 306) sees a high impedance. Therefore, the back-to-back body to source and body to drain diodes are maintained.

The FET control circuit 310 of Figure 3 also includes a first capacitor (C1) 320 and a second capacitor (C2) 321. The first capacitor (C1) 320 is connected in series between the control terminal of the first battery connection switch (M1) 315 and the second battery connection terminal (CBL) 307. The second capacitor (C2) 321 is connected in series between the control terminal of the second battery connection switch (M2) 316 and the first battery connection terminal (CBH) 306.

When the voltage at the first battery connection terminal (CBH) 306 is higher than the voltage at the second battery connection terminal (CBL) 307, the second battery connection switch (M2) 316 is closed such that the lowest-of-supply node (LOS) 311 is connected to the second battery connection terminal (CBL) 307. In this scenario, and at high frequencies, the second capacitor (C2) 321 shorts the gate voltage to the first battery connection terminal (CBH) 306 thereby guaranteeing switching on of the second battery connection switch (M2) 316. Similarly, when the voltage at the first battery connection terminal (CBH) 306 is lower than the voltage at the second battery connection terminal (CBL) 307, the first battery connection switch (M1) 315 is closed such that the lowest-of-supply node (LOS) 311 is connected to the first battery connection terminal (CBH) 306. In this scenario, and at high frequencies, the first capacitor (C1) 320 shorts the gate voltage to the second battery connection terminal (CBL) 307 thereby guaranteeing switching on of the first battery connection switch (M1) 315. In this way, the first and second capacitors (C1, C2) 320, 321, which are connected to the control terminals of the respective battery connection switches (M1, M2) 315, 316, can improve the operation of the battery connection switches (M1, M2) 315, 316.

Use of the first and second capacitors (C1, C2) 320, 321 can increase the response time of the switching circuit, such that it can more quickly react to a change in which of the voltages at the first battery connection terminal (CBH) 306 and the second battery connection terminal (CBL) 307 is the lowest. For example, if the frequency of any DPI is higher than the bandwidth of the amplifier 317, then the charge that is stored on the first capacitor (C1) 320 and the second capacitor (C2) 321 can put the lowest-of-supply node (LOS) 311 to the lowest potential out of the first battery connection terminal (CBH) 306 and the second battery connection terminal (CBL) 307 during the direct power injection. The DPI may have a frequency range between 150kHz and 1GHz, in some examples. Moreover, in this example the values of the first and second capacitors (C1, C2) 320, 321 is of the order of a few picofarads. The specific capacitance values that are used can be chosen depending on how quickly they should "take-over" instead of the amplifier 317.

Under DPI, when the voltage at the second battery connection terminal (CBL) 307 is momentarily higher than the voltage at the first battery connection terminal (CBH) 306, if the gate of the cell balancing FET (M_{swi}) 309 is kept connected to the second battery connection terminal (CBL) 307 then the cell balancing FET (M_{swi}) 309 turns momentarily ON and draws current only when the voltage at the second battery connection terminal (CBL) 307 is higher than the voltage at the first battery connection terminal (CBH) 306. That is, there is a DC shift. In the presence of the hysteresis amplifier 317, M1 315, M2 316, C1 320, C2 321, the gate of the cell balancing FET (M_{swi}) 309 is briefly connected to the first battery connection terminal (CBH) 306 when the voltage at the second battery connection terminal (CBL) 307 is greater than the voltage at the the first battery connection terminal (CBH) 306 momentarily under DPI. If the DPI injection frequency is within the bandwidth of the amplifier 317, then the first amplifier output signal (Vom) and the second amplifier output signal (Vop) follow and the gate of the cell balancing FET (M_{swi}) 309 is connected to the lowest potential out of the first battery connection terminal (CBH) 306 and the second battery connection terminal (CBL) 307 during DPI. If the DPI injection frequency is higher than the bandwidth of the amplifier 317, then C1 320 and C2 321, and the way that they are connected, ensures that the lowest-of-supply node (LOS) 311 is set as the lowest potential out of the first battery connection terminal (CBH) 306 and the second battery connection terminal (CBL) 307 during DPI. Moreover, in this example the values of the first and second capacitors (C1, C2) 320, 321 is of the order of a few picofarads. The specific capacitance values that are used can be chosen depending on how quickly they should "take-over" instead of the amplifier 317.

Finally, one could think that the body of the cell balancing FET (M_{swi}) 309 could be left floating to have a back-to-back body diodes configuration. However, the breakdown voltage (BVDSS) of the MOS would be greatly reduced. In fact, the resistance of the bias resistor (Rb) 324 helps keep the BVDSS of the MOS high enough, which is especially beneficial for high voltage applications.

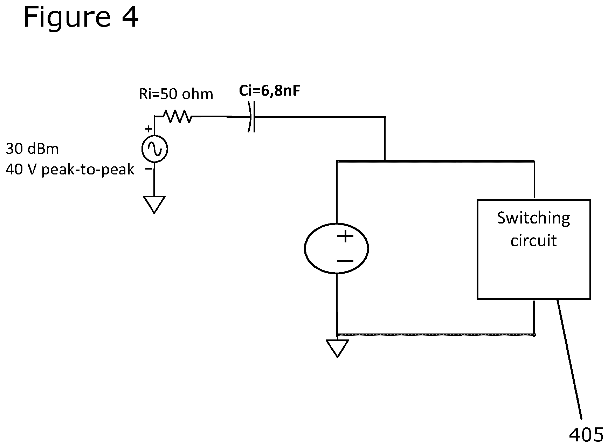

The circuits of Figure 3 and Figure 2 were tested in terms of induced DC shift in a harsh DPI environment. Figure 4 shows the setup that was used to simulate DPI, where the switching circuit 405 was either the circuit of Figure 3 or the circuit of Figure 2.

It was found that the circuit of Figure 3 results in a very comparable DC shift to the back-to-back switch of Figure 2. However, the circuit of Figure 3 requires significantly less area on the IC.

In order to perform the comparison, the following setup was implemented:
- DPI is applied to both the designs with a 30 dBm level coupled onto the IC through PCB (printed circuit board) traces which were modelled appropriately.
- 30 dBm is injected differentially to generate high amplitude levels across the switch. High enough to have negative oscillations in order to test the circuit of Figure 3 and compare it.
- 40 points per decade was considered in the range of [150kHz; 1GHz] to cover as many frequencies as possible and resonances.
- 2000 periods were simulated for each frequency to be sure that the permanent regime has been reached.
- The voltage of the battery cell (represented by a voltage source in Figure 4) was given the lowest value that a cell can take, which is around 2V so that the oscillations across the switch can go negative (below 0V).
- The DC value of the oscillations across the switch is calculated and averaged over the last 50 periods of the simulation. Then the delta between this quantity and the cell voltage (2V) is calculated and compared.

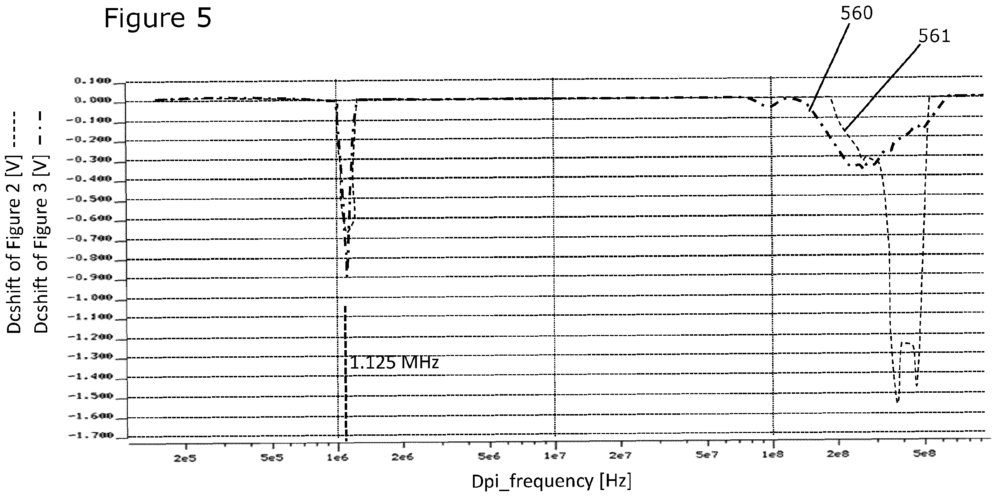

Figure 5 shows the results of the tests. A first plot (shown as a dot-dashed line) 560 is the DC value of the oscillations generated across the switch for the circuit of Figure 3 minus the cell voltage (2V). A second plot (shown as a dashed line) 561 is the DC shift value generated by the oscillations across the switch for the circuit of Figure 2 minus the cell voltage (2V). As can be seen, the DC shifts of both circuits are very comparable, which means that the same results can be achieved with just one the one MOSFET of Figure 3 instead of multiplying the area by 4 by using a back-to-back circuit such as the one of Figure 2. Furthermore, @1.125 MHZ both circuits fail due to the very high injection levels. In most of the rest of the frequency range, the DC shifts match. In fact, starting from 100 MHz, the circuit of Figure 3 does not fail whereas the DC shift for the circuit of Figure 2 reaches very high values.

Returning to Figure 3, a first balancing resistor 322 is connected in series between the first battery connection terminal (CBH) 306 and the first battery terminal of the battery cell 308. Also, a second balancing resistor 323 is connected in series between the second battery connection terminal (CBL) 307 and the second battery terminal of the battery cell 308. Therefore, examples disclosed herein relate to a BMS that includes:
- any of the switching circuits disclosed herein;
- a battery cell 308 having a first battery terminal and a second battery terminal;
- a first balancing resistor 322 that is connected in series between the first battery connection terminal (CBH) 306 and the first battery terminal; and
- a second balancing resistor 323 that is connected in series between the second battery connection terminal (CBL) 307 and the second battery terminal.

Advantages associated with the switching circuits disclosed herein can include one or more of:
- A reduction of area on the integrated circuit, which can be a reduction by as much as 1mm².
- The leakage of the switching circuits disclosed herein can be equivalent to a back-to-back switch implementation.
- A drive configuration capable of setting the gate of the single cell balancing MOS switch to the lowest transient voltage (drain or source) in order to keep the switch OFF and prevent it from causing any DC shift in the entirety of the DPI frequency range [e.g., 150 kHz; 1GHZ] even if the drive configuration includes a bandwidth limited hysteresis amplifier.
- Improved electromagnetic compatibility (EMC) with very little IC area cost.
- Lower DC shifts at high frequencies (> 100 MHz), when compared to a back-to-back solution.
- Improved accuracy measurements in highly EMI polluted environments with very little IC area cost.

Advantageously, one or more of the embodiments disclosed herein include a first part of connecting the body of a single MOS switch to its source through a high value bias resistor (e.g., a few mega ohms) in order to benefit from the back-to-back body to source and body to drain diodes across the battery cell. Thus, there can be reduced or no rectification (DC shift) that would compromise cell measurement accuracy. However, if EMI present and a negative transient voltage is across the MOS switch, it could momentarily turn on and conduct current, thus generating rectification (DC shift) if it's gate is not tied to the lowest potential (source or drain) to keep it turned off during this event. For that matter, a second part of embodiments disclosed herein relates to a drive configuration that can tie the gate of the single MOS switch to the lowest transient voltage out of the source and drain in the entirety of the Direct Power Injection (DPI) frequency range (150kHz; 1GHz). In this way, examples described herein can be capable of preventing DC shifts for more accurate measurements in a highly EMI polluted environments. This can be as much as a back-to-back solution, without leading to a considerable increase in area and cost.

Any of the switching circuits disclosed herein can be used in the battery cell controllers (BCC) and battery management systems (BMS), especially in an EMI polluted environment as can be the case with electric cars.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computerreadable or computer-usable storage media or mediums. Such computerreadable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A switching circuit for cell-balancing in a battery management system, BMS, the switching circuit comprising:
a first battery connection terminal, for connecting to a first battery terminal;
a second battery connection terminal, for connecting to a second battery terminal;
a cell balancing field effect transistor, FET, comprising:
a gate terminal;
a drain terminal connected to the first battery connection terminal;
a source terminal for connected to the second battery connection terminal; and
a body terminal;
a gate control circuit that is configured to connect the gate terminal of the cell balancing FET to the battery connection terminal that has the lowest voltage; and
a bias resistor that is connected in series between the body terminal of the cell balancing FET and one of the first and second battery connection terminals.

2. The switching circuit of claim 1, wherein the bias resistor is connected in series between the body terminal of the cell balancing FET and the second battery connection terminal.

3. The switching circuit of claim 1 or claim 2, wherein the bias resistor has a resistance value of the order of mega Ohms.

4. The switching circuit of any preceding claim, wherein the cell balancing FET is the only FET that is connected between the first battery connection terminal and the second battery connection terminal.

5. The switching circuit of any preceding claim, wherein:
the FET control circuit comprises:
a lowest-of-supply node; and
a gate pull-down switch that is connected between the lowest-of-supply node and the gate terminal of the cell balancing FET.

6. The switching circuit of claim 5, wherein:
the FET control circuit comprises:
a first battery connection switch that is connected between the first battery connection terminal and the lowest-of-supply node;
a second battery connection switch that is connected between the second battery connection terminal and the lowest-of-supply node; and
an LOS node control circuit that is configured to:
close the first battery connection switch and open the second battery connection switch when the voltage level at the first battery connection terminal is lower than the voltage level at the second battery connection terminal; and
open the first battery connection switch and close the second battery connection switch when the voltage level at the first battery connection terminal is higher than the voltage level at the second battery connection terminal.

7. The switching circuit of claim 6, wherein the LOS node control circuit comprises:
an amplifier that is configured to:
compare the voltage level at the first battery connection terminal with the voltage level at the second battery connection terminal;
provide a first amplifier output signal to a control terminal of the first battery connection switch in order to: i) close the first battery connection switch when the voltage level at the first battery connection terminal is lower than the voltage level at the second battery connection terminal; and ii) open the first battery connection switch when the voltage level at the first battery connection terminal is higher than the voltage level at the second battery connection terminal; and
provide a second amplifier output signal to a control terminal of the second battery connection switch in order to: i) open the second battery connection switch when the voltage level at the first battery connection terminal is lower than the voltage level at the second battery connection terminal; and ii) close the second battery connection switch when the voltage level at the first battery connection terminal is higher than the voltage level at the second battery connection terminal.

8. The switching circuit of claim 7, wherein the amplifier is a hysteresis amplifier.

9. The switching circuit of claim 7 or claim 8, wherein the FET control circuit further comprises:
a first capacitor connected in series between the control terminal of the first battery connection switch and the second battery connection terminal; and
a second capacitor connected in series between the control terminal of the second battery connection switch and the first battery connection terminal.

10. The switching circuit of claim 9, wherein the capacitance values of the first capacitor and the second capacitor are of the order of picofarads.

11. The switching circuit of any preceding claim, wherein the FET control circuit further comprises a gate pull-up switch that is connected between a supply voltage terminal and the gate terminal of the cell balancing FET.

12. A battery management system, BMS, comprising:
the switching circuit of any preceding claim;
a battery cell having a first battery terminal and a second battery terminal;
a first balancing resistor that is connected in series between the first battery connection terminal and the first battery terminal; and
a second balancing resistor that is connected in series between the second battery connection terminal and the second battery terminal.

## Patentansprüche

1. Schalt-Schaltung zum Zellbalancing in einem Batteriemanagementsystem, BMS, wobei die Schalt-Schaltung umfasst:
einen ersten Batterieverbindungsanschluss zum Verbinden mit einem ersten Batterieanschluss;
einen zweiten Batterieverbindungsanschluss zum Verbinden mit einem zweiten Batterieanschluss;
einen Zellbalancing-Feldeffekttransistor, FET, umfassend:
einen Gate-Anschluss;
einen Drain-Anschluss, der mit dem ersten Batterieverbindungsanschluss verbunden ist;
einen Source-Anschluss, der mit dem zweiten Batterieverbindungsanschluss verbunden ist; und
einen Body-Anschluss;
eine Gate-Steuerschaltung, die dazu ausgelegt ist, den Gate-Anschluss des Zellbalancing-FET mit dem Batterieverbindungsanschluss, der die niedrigste Spannung aufweist, zu verbinden; und
einen Vorspannungswiderstand, der in Reihe zwischen dem Body-Anschluss des Zellbalancing-FET und einem des ersten und zweiten Batterieverbindungsanschlusses verbunden ist.

2. Schalt-Schaltung nach Anspruch 1, wobei der Vorspannungswiderstand zwischen dem Body-Anschluss des Zellbalancing-FET und dem zweiten Batterieverbindungsanschluss in Reihe verbunden ist.

3. Schalt-Schaltung nach Anspruch 1 oder Anspruch 2, wobei der Vorspannungswiderstand einen Widerstandswert in der Größenordnung von Megaohm aufweist.

4. Schalt-Schaltung nach einem der vorhergehenden Ansprüche, wobei der Zellbalancing-FET der einzige FET ist, der zwischen dem ersten Batterieverbindungsanschluss und dem zweiten Batterieverbindungsanschluss verbunden ist.

5. Schalt-Schaltung nach einem der vorhergehenden Ansprüche, wobei:
die FET-Steuerschaltung umfasst:
einen Lowest-of-Supply-Knoten; und
einen Gate-Pull-Down-Schalter, der zwischen dem Lowest-of-Supply-Knoten und dem Gate-Anschluss des Zellbalancing-FET verbunden ist.

6. Schalt-Schaltung nach Anspruch 5, wobei:
die FET-Steuerschaltung umfasst:
einen ersten Batterieverbindungsschalter, der zwischen dem ersten Batterieverbindungsanschluss und dem Lowest-of-Supply-Knoten verbunden ist;
einen zweiten Batterieverbindungsschalter, der zwischen dem zweiten Batterieverbindungsanschluss und dem Lowest-of-Supply-Knoten verbunden ist; und
eine LOS-Knoten-Steuerschaltung, die ausgelegt ist zum:
Schließen des ersten Batterieverbindungsschalters und Öffnen des zweiten Batterieverbindungsschalters, wenn der Spannungspegel an dem ersten Batterieverbindungsanschluss niedriger als der Spannungspegel an dem zweiten Batterieverbindungsanschluss ist; und
Öffnen des ersten Batterieverbindungsschalters und Schließen des zweiten Batterieverbindungsschalters, wenn der Spannungspegel an dem ersten Batterieverbindungsanschluss höher als der Spannungspegel an dem zweiten Batterieverbindungsanschluss ist.

7. Schalt-Schaltung nach Anspruch 6, wobei die LOS-Knoten-Steuerschaltung umfasst:
einen Verstärker, der ausgelegt ist zum:
Vergleichen des Spannungspegels an dem ersten Batterieverbindungsanschluss mit dem Spannungspegel an dem zweiten Batterieverbindungsanschluss;
Bereitstellen eines ersten Verstärkerausgangssignals an einen Steueranschluss des ersten Batterieverbindungsschalters, um: i) den ersten Batterieverbindungsschalter zu schließen, wenn der Spannungspegel an dem ersten Batterieverbindungsanschluss niedriger als der Spannungspegel an dem zweiten Batterieverbindungsanschluss ist; und ii) den ersten Batterieverbindungsschalter zu öffnen, wenn der Spannungspegel an dem ersten Batterieverbindungsanschluss höher als der Spannungspegel an dem zweiten Batterieverbindungsanschluss ist; und
Bereitstellen eines zweiten Verstärkerausgangssignals an einen Steueranschluss des zweiten Batterieverbindungsschalters, um: i) den zweiten Batterieverbindungsschalter zu öffnen, wenn der Spannungspegel an dem ersten Batterieverbindungsanschluss niedriger als der Spannungspegel an dem zweiten Batterieverbindungsanschluss ist; und ii) den zweiten Batterieverbindungsschalter zu schließen, wenn der Spannungspegel an dem ersten Batterieverbindungsanschluss höher als der Spannungspegel an dem zweiten Batterieverbindungsanschluss ist.

8. Schalt-Schaltung nach Anspruch 7, wobei der Verstärker ein Hystereseverstärker ist.

9. Schalt-Schaltung nach Anspruch 7 oder Anspruch 8, wobei die FET-Steuerschaltung ferner umfasst:
einen ersten Kondensator, der zwischen dem Steueranschluss des ersten Batterieverbindungsschalters und dem zweiten Batterieverbindungsanschluss in Reihe verbunden ist; und
einen zweiten Kondensator, der zwischen dem Steueranschluss des zweiten Batterieverbindungsschalters und dem ersten Batterieverbindungsanschluss in Reihe verbunden ist.

10. Schalt-Schaltung nach Anspruch 9, wobei die Kapazitätswerte des ersten Kondensators und des zweiten Kondensators in der Größenordnung von Pikofarad liegen.

11. Schalt-Schaltung nach einem der vorhergehenden Ansprüche, wobei die FET-Steuerschaltung ferner einen Gate-Pull-Up-Schalter umfasst, der zwischen einem Versorgungsspannungsanschluss und dem Gate-Anschluss des Zellbalancing-FET verbunden ist.

12. Batteriemanagementsystem, BMS, umfassend:
die Schalt-Schaltung nach einem der vorhergehenden Ansprüche;
eine Batteriezelle mit einem ersten Batterieanschluss und einem zweiten Batterieanschluss;
einen ersten Abgleichwiderstand, der zwischen dem ersten Batterieverbindungsanschluss und dem ersten Batterieanschluss in Reihe verbunden ist; und
einen zweiten Abgleichwiderstand, der zwischen dem zweiten Batterieverbindungsanschluss und dem zweiten Batterieanschluss in Reihe verbunden ist.

## Revendications

1. Circuit de commutation destiné à l'équilibrage de cellule dans un système de gestion de batterie, BMS, le circuit de commutation comprenant :
une première borne de connexion de batterie, destinée à être connectée à une première borne de batterie ;
une deuxième borne de connexion de batterie, destinée à être connectée à une deuxième borne de batterie ;
un transistor à effet de champ, FET, d'équilibrage de cellule, comprenant :
une borne de grille ;
une borne de drain connectée à la première borne de connexion de batterie ;
une borne de source destinée à être connectée à la deuxième borne de connexion de batterie ; et
une borne de corps ;
un circuit de commande de grille qui est configuré pour connecter la borne de grille du FET d'équilibrage de cellule à la borne de connexion de batterie qui présente la tension la plus basse ; et
une résistance de polarisation qui est connectée en série entre la borne de corps du FET d'équilibrage de cellule et l'une des première et deuxième bornes de connexion de batterie.

2. Circuit de commutation selon la revendication 1, dans lequel la résistance de polarisation est connectée en série entre la borne de corps du FET d'équilibrage de cellule et la deuxième borne de connexion de batterie.

3. Circuit de commutation selon la revendication 1 ou la revendication 2, dans lequel la résistance de polarisation présente une valeur de résistance de l'ordre de plusieurs mégohms.

4. Circuit de commutation selon l'une quelconque des revendications précédentes, dans lequel le FET d'équilibrage de cellule est le seul FET qui est connecté entre la première borne de connexion de batterie et la deuxième borne de connexion de batterie.

5. Circuit de commutation selon l'une quelconque des revendications précédentes, dans lequel :
le circuit de commande de FET comprend :
un nœud à la tension d'alimentation la plus basse ; et
un commutateur de rappel de la grille au niveau bas qui est connecté entre le nœud à la tension d'alimentation la plus basse et la borne de grille du FET d'équilibrage de cellule.

6. Circuit de commutation selon la revendication 5, dans lequel :
le circuit de commande de FET comprend :
un premier commutateur de connexion de batterie qui est connecté entre la première borne de connexion de batterie et le nœud à la tension d'alimentation la plus basse ;
un deuxième commutateur de connexion de batterie qui est connecté entre la deuxième borne de connexion de batterie et le nœud à la tension d'alimentation la plus basse ; et
un circuit de commande de nœud LOS qui est configuré pour :
fermer le premier commutateur de connexion de batterie et ouvrir le deuxième commutateur de connexion de batterie lorsque le niveau de tension à la première borne de connexion de batterie est inférieur au niveau de tension à la deuxième borne de connexion de batterie ; et
ouvrir le premier commutateur de connexion de batterie et fermer le deuxième commutateur de connexion de batterie lorsque le niveau de tension à la première borne de connexion de batterie est supérieur au niveau de tension à la deuxième borne de connexion de batterie.

7. Circuit de commutation selon la revendication 6, dans lequel le circuit de commande de nœud LOS comprend : un amplificateur qui est configuré pour :
comparer le niveau de tension à la première borne de connexion de batterie avec le niveau de tension à la deuxième borne de connexion de batterie ;
fournir un premier signal de sortie d'amplificateur à une borne de commande du premier commutateur de connexion de batterie afin de : i) fermer le premier commutateur de connexion de batterie lorsque le niveau de tension à la première borne de connexion de batterie est inférieur au niveau de tension à la deuxième borne de connexion de batterie ; et ii) ouvrir le premier commutateur de connexion de batterie lorsque le niveau de tension à la première borne de connexion de batterie est supérieur au niveau de tension à la deuxième borne de connexion de batterie ; et
fournir un deuxième signal de sortie d'amplificateur à une borne de commande du deuxième commutateur de connexion de batterie afin de : i) ouvrir le deuxième commutateur de connexion de batterie lorsque le niveau de tension à la première borne de connexion de batterie est inférieur au niveau de tension à la deuxième borne de connexion de batterie ; et ii) fermer le deuxième commutateur de connexion de batterie lorsque le niveau de tension à la première borne de connexion de batterie est supérieur au niveau de tension à la deuxième borne de connexion de batterie.

8. Circuit de commutation selon la revendication 7, dans lequel l'amplificateur est un amplificateur à hystérésis.

9. Circuit de commutation selon la revendication 7 ou la revendication 8, dans lequel le circuit de commande de FET comprend en outre :
un premier condensateur connecté en série entre la borne de commande du premier commutateur de connexion de batterie et la deuxième borne de connexion de batterie ; et
un deuxième condensateur connecté en série entre la borne de commande du deuxième commutateur de connexion de batterie et la première borne de connexion de batterie.

10. Circuit de commutation selon la revendication 9, dans lequel les valeurs de capacité du premier condensateur et du deuxième condensateur sont de l'ordre de plusieurs picofarads.

11. Circuit de commutation selon l'une quelconque des revendications précédentes, dans lequel le circuit de commande de FET comprend en outre un commutateur de rappel de la grille au niveau haut qui est connecté entre une borne de tension d'alimentation et la borne de grille du FET d'équilibrage de cellule.

12. Système de gestion de batterie, BMS, comprenant :
le circuit de commutation selon l'une quelconque des revendications précédentes ;
une cellule de batterie présentant une première borne de batterie et une deuxième borne de batterie ;
une première résistance d'équilibrage qui est connectée en série entre la première borne de connexion de batterie et la première borne de batterie ; et
une deuxième résistance d'équilibrage qui est connectée en série entre la deuxième borne de connexion de batterie et la deuxième borne de batterie.
